# EUROPÄISCHE PATENTANMELDUNG

(11) **EP 4 183 508 A1**
(43) Veröffentlichungstag der Anmeldung: **24.05.2023**
(21) Anmeldenummer: 22208756.1
(22) Anmeldetag: 22.11.2022
(51) Int. Cl.: B23D 77/02, B23D 77/06, B23C 5/00

(54) **SCHNEIDKOPF FÜR EIN SPANABHEBENDES WERKZEUG**

(30) Priorität: 23.11.2021 DE 102021130601
(71) Anmelder: Gühring KG, 72458 Albstadt (DE)
(72) Erfinder: Hebisch, Harald, 38176 Wendeburg (DE)
(74) Vertreter: Gleim, Christian Ragnar

(57) **Zusammenfassung**

Die Erfindung betrifft einen Schneidkopf 1 für ein spanabhebendes Werkzeug, der einen um eine Drehachse rotationssymmetrischen Grundkörper 2 und mehrere Schneidplatten 6 umfasst. Der Grundkörper 2 umfasst eine Stirnfläche 3, einen Anschnitt 11 und eine Umlauffläche 4 mit mehreren zu einer Drehachse gerichteten Nuten 5, die jeweils einen Nutboden 14 und zwei Nutwände 15 aufweisen. Innerhalb jeder der Nuten 5 ist an einer der zwei Nutwände 15 eine der Schneidplatten 6 montiert ist. An den Nutböden 14 angrenzend, jeweils senkrecht zu der Stirnfläche 3, sind Sacklöcher 10 im Grundkörper 2 vorhanden in denen jeweils ein Verschleißschutzkörper 7 mit einer Ausnehmung derart eingepasst ist, dass die Ausnehmung zwischen den Nutwänden 15 liegt und der Verschleißschutzkörper 7 zumindest im Bereich des Anschnitts 11 den Nutboden 14 bildet. Durch die Verschleißschutzkörper 7 wird ein frühzeitiger Verschleiß der Grundkörpers 2 verhindert, so dass eine längere Haltezeit erreicht wird.

## Beschreibung

Die Erfindung betrifft einen Schneidkopf für ein spanabhebendes Werkzeug, das trotz geringer Materialkosten besonders langlebig und belastbar ist.

In der Metallbearbeitung ist das Zerspanen ein weit verbreiteter Prozess, um einem Werkstück eine bestimmte geometrische Form zu geben. Eine Methode ist das Zerspanen mit rotierenden Werkzeugen mit geometrisch bestimmter Schneide, bei dem das Werkzeug in Rotation versetzt und Späne durch klar definierte Schneiden am Werkzeug abgetragen werden. Beim Einbringen von Löchern kann nach dem Bohren und gegebenenfalls Senken durch Reiben eine sehr präzise Bohrung erreicht werden, die sich durch hohe Maßgenauigkeit, Oberflächengüte und Formgenauigkeit auszeichnet. Man unterscheidet dabei das Rundreiben von dem Profilreiben.

Für beide Varianten werden Reibahlen eingesetzt, die einen Anschnitt und eine Führung umfassen, an denen die Schneiden angebracht sind. Der Großteil der Spanarbeit wird dabei am Anschnitt ausgeführt, da mit diesem die Bohrung weiter geöffnet wird.

Das Reiben, vor allem das Rundreiben, von Metallen stellt aufgrund der hohen Drehzahlen und der Härte der zu bearbeitenden Materialien besondere Anforderungen an die Verschleißfestigkeit der Werkzeuge aufgrund der auftretenden hohen thermischen und mechanischen Belastungen. Die Schneiden haben daher eine beschränkte Haltbarkeit, welche durch die Standzeit quantifiziert wird. Da ein Verschleiß der Schneiden steigende Zerspankräfte und Geometrieabweichungen bewirkt, kann es auch am Werkstück zu unerwünschter Rauheit, Formfehlern oder Maßfehlern kommen. Um nicht das gesamte Werkzeug verschrotten zu müssen, wenn die Schneiden verschlissen sind, werden im Stand der Technik die Schneiden austauschbar an einem Grundkörper angebracht. Der Grundkörper und die Schneiden bilden zusammen mit einem Schaft das komplette Werkzeug und können gemeinsam oder auch individuell austauschbar ausgeführt sein.

Aus der WO 2012 / 025 091 A2 ist ein spanabhebendes Werkzeug, das zum Beispiel eine Reibahle (dort Reibwerkzeug) sein kann, bekannt, das zumindest einen plattenförmigen Schneideinsatz aus einem schlag- und/oder verschleißfestem Schneidstoff umfasst. Der Schneideinsatz ist über eine Kontaktflächenanordnung unverrückbar mit dem Grundkörper, hier als Schneidenträger bezeichnet, verbunden. Die Schneideinsätze sind vor allem geklebt, können aber auch angeschraubt oder mit Spannpratzen gehalten werden, so dass sie austauschbar sind. In der Praxis werden derartige Werkzeuge mit Cermet, Vollhartmetall, Kohlenstoffbohrnitrat oder mit Diamant beschichteten Schneideinsätzen bestückt.

Bei einem derartigen Zerspanungswerkzeug kommt es neben dem Verschleiß der Schneideinsätze auch zum Verschleiß am Grundkörper durch Abrasion, da die beim Gebrauch entstehenden Metallspäne am Grundkörper reiben. Daher ist nach einer bestimmten Standzeit auch der Grundkörper trotz austauschbarer Schneiden nicht mehr verwendbar und muss verschrottet werden. Um die Standzeit zu maximieren, wird in der Regel der Grundkörper aus einem besonders festen Material gefertigt. So erreicht dieser zwar eine längere Standzeit, erreicht dies aber nur durch beachtliche Material- und Herstellungskosten.

Ferner sind aus dem Stand der Technik die DE 10 2017 114 391 A1 und die EP 2 131 983 B1 bekannt.

Es ist daher Aufgabe der Erfindung, einen Schneidkopf für ein spanabhebendes Werkzeug mit wechselbaren Schneiden bereitzustellen, dessen Grundkörper vor einem frühzeitigen Verschleiß geschützt ist.

Diese Aufgabe wird durch einen Schneidkopf für ein spanabhebendes Werkzeug gelöst, der einen um eine Drehachse rotationssymmetrischen Grundkörper und mehrere Schneidplatten umfasst. Der Grundkörper weist dabei eine Stirnfläche, einen Anschnitt und eine Umlauffläche mit mehreren zu einer Drehachse gerichteten Nuten auf. Die Nuten bestehen jeweils aus zwei Nutwänden und einem Nutboden, der die verbindende Fläche zwischen den Nutwänden darstellt. Innerhalb jeder der Nuten ist an einer der zwei Nutwände eine der Schneidplatten montiert. An die Nutböden angrenzend sind jeweils senkrecht zu der Stirnfläche Sacklöcher im Grundkörper vorhanden, wobei in jedem Sackloch jeweils ein Verschleißschutzkörper mit einer Ausnehmung derart eingepasst ist, dass die Ausnehmung zwischen den Nutwänden liegt. Der Verschleißschutzkörper bildet so zumindest im Bereich des Anschnitts den Nutboden.

Die Verschleißschutzkörper sind vorteilhaft aus einem Material gefertigt, das verschleißfester ist als das Material des Grundkörpers, damit die Standzeit der Verschleißschutzkörper hoch ist und sie seltener ausgetauscht werden müssen. Da die Verschleißschutzkörper weiterhin selbst klein gestaltet sein können, wird es möglich, die Materialkosten des Grundkörpers gering zu halten und über den Tausch der Verschleißschutzkörper die Betriebskosten allgemein zu reduzieren.

Es ist ferner von Vorteil, wenn die Verschleißschutzkörper jeweils auf einer der Ausnehmung gegenüberliegenden Rückseite eine, zwei oder drei Planflächen aufweisen, mit deren Hilfe ein Verdrehen der Verschleißschutzkörper innerhalb der Sacklöcher durch Formschluss verhindert wird.

Die Ausnehmungen sind idealerweise ferner an der jeweiligen Schneidplatte ausgerichtet, so dass zwischen den Verschleißschutzkörpern und der jeweiligen Schneidplatte weder ein Abstand noch eine Stufe vorhanden ist. So wird der Spanabtransport zuverlässiger und gleichmäßiger an allen Schneidplatten.

Es hat sich ferner als vorteilhaft erwiesen, die Verschleißschutzkörper über Befestigungsmittel in Form von Senkkopfschrauben zu fixieren. Auf diese Weise können die Verschleißschutzkörper individuell ausgewechselt und die Haltezeit des Grundkörpers noch weiter erhöht werden. Die Verwendung von Senkkopfschrauben stellt sicher, dass die Befestigungsmittel nicht über die Stirnfläche hinausragen und so am Werkstück reiben.

Es ist weiterhin vorteilhaft die Verschleißschutzkörper zu optimieren. So haben die Ausnehmungen einen Öffnungswinkel zwischen 30° und 100°, wobei sich 60° als Optimum herausgestellt hat.

Ferner ist es von Vorteil, wenn die einzelnen Ausnehmungen nicht in die jeweiligen Nutwände übergehen. An der einen Nutwand liegt die Schneidplatte, bei der, wie bereits oben erläutert, vorteilhaft weder ein Abstand noch eine Stufe zum Verschleißschutzkörper vorhanden ist. An der gegenüberliegenden Nutwand geht der Verschleißschutzkörper nicht in diese über, so dass von der Schneidplatte abgetragene Späne auch von dieser Nutwand wegtransportiert werden. Damit wird der Verschleiß am Grundkörper im Bereich der der Schneidplatte gegenüberliegenden Nutwand oder dem Anschnitt weiter reduziert.

In einer weiteren vorteilhaften Ausgestaltung des Schneidkopfs verlaufen die Sacklöcher von der Stirnfläche über den Anschnitt hinaus, aber nicht vollständig entlang der Nut. Dieser Aufbau berücksichtigt, dass der größte Abtrag an der Stelle stattfindet, an der der Nutboden in die Stirnfläche übergeht. Am restlichen Grundkörper ist der Verschleiß minimal, so dass die Verschleißschutzkörper hier nicht zwingend benötigt und dementsprechend kleiner ausgeführt werden können, was Material und schlussendlich weiter Kosten einspart.

Ferner ist es vorteilhaft, wenn die Nuten im Bereich des durch die Verschleißschutzkörper gebildeten Nutbodens eine geringere Tiefe aufweisen als im Bereich des nicht durch den Einsatz gebildeten Nutbodens. Die Tiefe einer Nut ist dabei definiert als der größtmögliche Abstand des Nutbodens von der Umlauffläche entlang einer Geraden, die senkrecht zu der Umlauffläche verläuft. Liegt der durch den Verschleißschutzkörper gebildete Nutboden etwas höher als der durch den Grundkörper gebildete, so wird verhindert, dass der Grundkörper über den Verschleißschutzkörper hinausragt. Andernfalls können Späne den durch den Grundkörper gebildeten Nutboden abtragen, wenn sie über die Ausnehmung des Verschleißschutzkörpers abgeführt werden und gegen die dort auftretende Stufe schlagen. Es besteht ferner die Möglichkeit, dass Späne zum Werkstück hin abgelenkt werden, was ebenfalls unerwünscht ist. Indem also der Verschleißschutzkörper derart ausgeprägt ist, dass der durch ihn gebildete Nutboden eine geringere Tiefe aufweist als im Bereich des nicht durch den Verschleißschutzkörper gebildeten Nutbodens, wird ein verbesserter Spanabtransport gewährleistet.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein.

Zur Vermeidung von Wiederholungen werden gleiche oder einander entsprechende Elemente in verschiedenen Figuren mit gleichen Bezugszeichen bezeichnet und nicht mehrmals erläutert. Es zeigen:
- Fig. 1: ein spanabhebendes Werkzeug mit einem erfindungsgemäßen Schneidkopf,
- Fig. 2a, 2b: Darstellungen der Verschleißschutzkörper, wie sie in den Schneidkopf eingesetzt sind,
- Fig. 3: verschiedene Varianten der Verschleißschutzkörper.

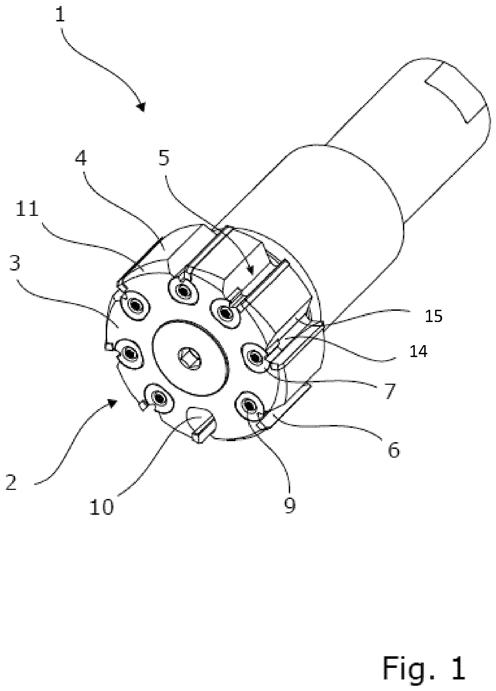

Die **Fig. 1** zeigt ein spanabhebendes Werkzeug, mit einem Schaft und einem Schneidkopf 1, welcher einen Grundkörper 2 umfasst. Der Grundkörper 2 ist als ein zu einer Drehachse rotationssymmetrischer Körper gestaltet, der eine Stirnfläche 3, eine Umlauffläche 4 und einen Anschnitt 11 aufweist. Der Anschnitt 11 kann dabei als Fase an dem Grundkörper 2 ausgebildet sein. Alternativ kann der Anschnitt 11 jedoch auch derartig gewölbt sein, dass ein fließender Übergang zwischen Stirnfläche 3 und Umlauffläche 4 vorhanden ist. Im Extremfall kann der Grundkörper 2 somit nahezu konisch sein.

An der Umlauffläche 4 des Grundkörpers 2 sind Nuten 5 vorhanden, die jeweils durch zwei Nutwände 15 und einen Nutboden 14 gebildet werden. In jeder Nut 5 ist an einer Nutwand 15 eine Schneidplatte 6 befestigt. Die Schneidplatten 6 kommen mit einem Werkstück in Berührung und bewirken den Spanabtrag, so dass sie üblicherweise aus einem stoß- und verschleißfesten Material gefertigt sind. Außerdem ragen sie minimal über die Stirnfläche 3, den Anschnitt 11 als auch über die Umlauffläche 4 hinaus, damit das Werkstück mit den Schneidplatten 6, möglichst aber nicht mit dem Grundkörper 2, in Berührung kommt.

An jedem Nutboden 14 ist von der Stirnseite 3 aus senkrecht in den Grundkörper 2 ein Sackloch 10 eingebracht, das von der Stirnfläche 3 über den Anschnitt 11 hinaus, aber nicht vollständig entlang der Nut 5 verläuft. Dieses ist in seiner Kontur an einen Verschleißschutzkörper 7 angepasst, welcher durch ein Befestigungsmittel 9 in dem Sackloch 10 fixiert ist. Es gibt dazu verschiedene, fachübliche Möglichkeiten, wie Verschrauben, Klemmen oder Verkleben. Hier ist eine Verschraubung mit Senkkopfschrauben dargestellt, welche erlaubt, den Aufbau des Grundkörpers 2 zu vereinfachen und die Verschleißschutzkörper 7 trotzdem austauschbar zu gestalten. Vorteilhaft ist es dabei, die Verschleißschutzkörper 7 so auszugestalten, dass die Köpfe der als Befestigungsmittel 9 verwendeten Schrauben im befestigten Zustand nicht über die Stirnfläche 3 hinausragen. Andernfalls könnten die Befestigungsmittel 9 im Betrieb mit dem Werkstück in Kontakt kommen und sowohl der Schneidkopf 1 als auch das Werkstück beschädigt werden.

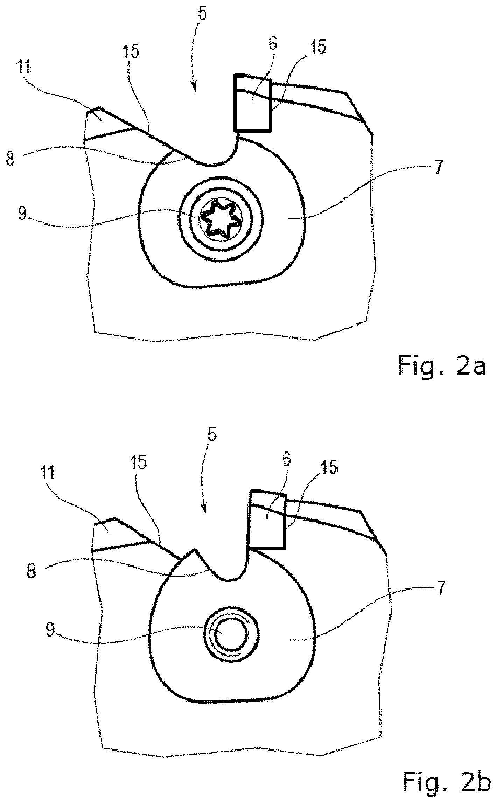

Die Ausgestaltung der Verschleißschutzkörper 7 an den jeweiligen Nuten 5 soll nun mit Bezug auf die **Fig. 2a** und **2b** näher beschrieben werden. Diese zeigen in einem vergrößerten Ausschnitt den in der Nut 5 eingefassten Verschleißschutzkörper 7 von der Stirnseite 3 des Grundkörpers 2 aus gesehen. In der Fig. 2a ist der Verschleißschutzkörper 7 in dem Sackloch 10 eingesetzt und mittels Befestigungsmittel 9, hier eine Innensechsrund-Senkkopfschraube, an dem Grundkörper 2 befestigt. Der Verschleißschutzkörper 7 weist eine Ausnehmung 8 auf, die zwischen den Nutwänden 15 der Nut 5 angeordnet ist. Zwischen dem Verschleißkörper 7 und der Schneidplatte 6 ist hier ein geringer Abstand und eine Stufe vorhanden. Durch die Stufe wird die Gefahr des Abriebs am Grundkörper 2 reduziert, da die Schneidplatte 6 von der entsprechenden Nutwand 15 aus gesehen höher als der Verschleißschutzkörper 7 liegt und abgehobene Späne kaum an den Grundkörper 2 gelangen können. Bei der der Schneidplatte 6 gegenüberliegenden Nutwand 15 geht der Verschleißschutzkörper 7 direkt in diese über.

Die **Fig. 2b** offenbart eine alternative Ausführung des Verschleißschutzkörpers 7. Dieser ist so ausgeführt, dass zwischen Schneidplatte 6 und dem Verschleißschutzkörper 7 weder ein Abstand noch eine Stufe vorhanden sind. Hier besteht keine Möglichkeit mehr, dass ein Span an dem Übergang zwischen Verschleißschutzkörper 7 und Schneidplatte 6 überhaupt an den Grundkörper 2 gelangt. Auf der gegenüberliegenden Nutwand 15 geht die Ausnehmung 8 nicht in diese über, so dass hier eine Stufe entsteht. Auf diese Weise werden abgetragene Späne noch weiter von dem Grundkörper 2 abgelenkt, so dass der Verschleiß weiter reduziert und idealerweise ganz verhindert werden kann. Das Befestigungsmittel 9 ist hier ein Stift, der den Verschleißschutzkörper 7 im Sackloch 10 festklemmt.

Als Material der Verschleißschutzkörper 7 kommen verschiedene Varianten in Betracht, die vom Anwendungsfall abhängen. Üblicherweise wird für den Verschleißschutzkörper 7 ein verschleißfesteres Material verwendet werden, als für den Grundkörper 2, doch bereits eine Austauschbarkeit der Verschleißschutzkörper 7 ermöglicht eine längere Haltezeit des Grundkörpers 2 und somit des gesamten Schneidkopfs 1. Die Verschleißschutzkörper 7 können insbesondere aus dem gleichen Material wie die Schneidplatten 6 bestehen, also zum Beispiel Cermet, Vollhartmetall, Kohlenstoffbohrnitrat, oder diamantbeschichtet sein.

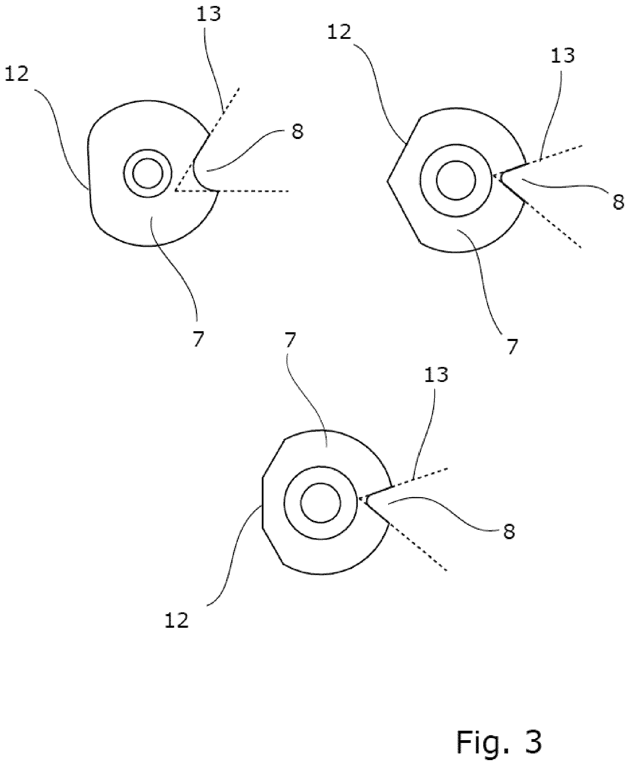

Die **Fig. 3** zeigt drei verschiedene Ausführungsformen des Verschleißschutzkörpers 7. Alle drei weisen eine Ausnehmung 8 und eine Rückseite 12 auf. Die Form der Ausnehmung 8 kann in der Regel durch eine Parabel oder durch zwei Parabelhälften angenähert werden. So wird eine optimale Spanablenkung sichergestellt und verhindert, dass Späne in der Ausnehmung 8 hängenbleiben. Die Ausnehmung 8 kann auch aus verschiedenen Richtungen eingebracht werden. Ihre Breite kann mittels des eingeschlossenen Öffnungswinkels 13 quantifiziert werden. Es hat sich herausgestellt, dass ein Öffnungswinkel 13 von 60° das Optimum darstellt, aber je nach Anwendungsfall hiervon abgewichen werden kann. In der Regel sind Öffnungswinkel 13 zwischen 30° und 100° üblich.

Die Rückseite 12 des Verschleißschutzkörpers 7, die der Ausnehmung 8 gegenüberliegt, wird idealerweise so ausgeführt, dass sie ein Verdrehen des Verschleißschutzkörpers 7 innerhalb des Sacklochs 10 verhindert. Im einfachsten Fall werden, wie in **Fig. 3** dargestellt, eine, zwei oder drei Planflächen als Rückseite 12 der Verschleißschutzkörper 7 vorgesehen. Diese Ausführungen sind vorteilhaft, da sich die Verschleißschutzkörper so leicht z.B. aus einem Vollrohr herstellen lassen. Im Grunde kann die Verdrehsicherung auch anders gelöst werden, entweder mittels Abflachungen an anderen Stellen des Verschleißschutzkörpers 7 oder gar konkave Segmente. Es gibt eine Reihe fachmännischer Ausführungen, die hier Anwendung finden können. Die gezeigten Varianten sind vor allem aus Kostengründen sinnvoll.

### Bezugszeichen

- 1: Schneidkopf
- 2: Grundkörper
- 3: Stirnfläche
- 4: Umlauffläche
- 5: Nut
- 6: Schneidplatte
- 7: Verschleißschutzkörper
- 8: Ausnehmung
- 9: Befestigungsmittel
- 10: Sackloch
- 11: Anschnitt
- 12: Rückseite
- 13: Öffnungswinkel
- 14: Nutboden
- 15: Nutwand

## Patentansprüche

1. Schneidkopf (1) für ein spanabhebendes Werkzeug, der einen um eine Drehachse rotationssymmetrischen Grundkörper (2) und mehrere Schneidplatten (6) umfasst, wobei der Grundkörper (2) eine Stirnfläche (3), einen Anschnitt (11) und eine Umlauffläche (4) mit mehreren zu einer Drehachse gerichteten Nuten (5), die jeweils einen Nutboden (14) und zwei Nutwände (15) aufweisen, umfasst und innerhalb jeder der Nuten (5) an einer der zwei Nutwände (15) eine der Schneidplatten (6) montiert ist, **dadurch gekennzeichnet, dass** an die Nutböden (14) angrenzend, jeweils senkrecht zu der Stirnfläche (3) Sacklöcher (10) im Grundkörper (2) vorhanden sind und in jedem Sackloch (10) jeweils ein Verschleißschutzkörper (7) mit einer Ausnehmung (8) derart eingepasst ist, dass die Ausnehmung (8) zwischen den Nutwänden (15) liegt und der Verschleißschutzkörper (7) zumindest im Bereich des Anschnitts (11) den Nutboden (14) bildet.

2. Schneidkopf (1) nach Anspruch 1, **dadurch gekennzeichnet, dass** die Verschleißschutzkörper (7) aus einem Material gefertigt sind, das verschleißfester ist als das Material des Grundkörpers.

3. Schneidkopf (1) nach Anspruch 1 oder 2, **dadurch gekennzeichnet, dass** die Verschleißschutzkörper (7) auf einer der Ausnehmung (8) gegenüberliegenden Rückseite (12) eine, zwei oder drei Planflächen aufweisen, mit deren Hilfe ein Verdrehen der Verschleißschutzkörper (7) innerhalb der Sacklöcher (10) durch Formschluss verhindert wird.

4. Schneidkopf (1) nach einem der Ansprüche 1 bis 3, **dadurch gekennzeichnet, dass** die Ausnehmungen (8) an der jeweiligen Schneidplatte (6) ausgerichtet sind, so dass zwischen den Verschleißschutzkörpern (7) und der jeweiligen Schneidplatte (6) weder ein Abstand noch eine Stufe vorhanden ist.

5. Schneidkopf (1) nach einem der Ansprüche 1 bis 4, **dadurch gekennzeichnet, dass** die Verschleißschutzkörper (7) über Befestigungsmittel (9) in Form von Senkkopfschrauben fixiert ist.

6. Schneidkopf (1) nach einem der Ansprüche 1 bis 5, **dadurch gekennzeichnet, dass** die Ausnehmungen (8) einen Öffnungswinkel (13) zwischen 30° und 100° aufweisen.

7. Schneidkopf (1) nach einem der Ansprüche 1 bis 6, **dadurch gekennzeichnet, dass** die einzelnen Ausnehmungen (8) nicht in die jeweiligen Nutwände (15) übergehen.

8. Schneidkopf (1) nach einem der Ansprüche 1 bis 7, **dadurch gekennzeichnet, dass** die Sacklöcher (10) von der Stirnfläche (3) über den Anschnitt (11) hinaus, aber nicht vollständig entlang der Nut (5) verlaufen.

9. Schneidkopf (1) nach einem der der Ansprüche 1 bis 8, **dadurch gekennzeichnet, dass** die Nuten (5) im Bereich des durch die Verschleißschutzkörper (7) gebildeten Nutbodens (14) eine geringere Tiefe aufweisen als im Bereich des nicht durch den Verschleißschutzkörper (7) gebildeten Nutbodens (14).
